# FASCICULE DE BREVET EUROPEEN

(11) **EP 2 747 902 B1**
(45) Date de publication et mention de la délivrance du brevet: **09.12.2015**
(21) Numéro de dépôt: 12756794.9
(22) Date de dépôt: 27.08.2012
(51) Int. Cl.: B05D 5/08, A47J 36/02

(54) **ARTICLE CULINAIRE COMPORTANT UN REVÊTEMENT ANTIADHÉSIF À BASE DE RÉSINE FLUOROCARBONÉE PRÉSENTANT DES PROPRIÉTÉS AMÉLIORÉES D'ADHÉRENCE AU SUPPORT AINSI QUE PROCÉDÉ POUR SON OBTENTION**
KOCHARTIKEL MIT EINER FLUORKOHLENSTOFFHARZ-ANTIHAFTBESCHICHTUNG MIT VERBESSERTEN SUBSTRATHAFTUNGSEIGENSCHAFTEN UND VERFAHREN ZU SEINER HERSTELLUNG
COOKING ARTICLE COMPRISING A FLUOROCARBON-RESIN NON-STICK COATING HAVING IMPROVED PROPERTIES OF ADHESION TO THE SUBSTRATE, AND METHOD FOR THE PRODUCTION THEREOF

(30) Priorité: 26.08.2011 FR 1157580
(43) Date de publication de la demande: 02.07.2014
(73) Titulaire: SEB S.A., 69130 Ecully Cedex (FR); Centre National de la Recherche Scientifique (CNRS), 75794 Paris Cedex 16 (FR); Universite De Haute Alsace, 68100 Mulhouse (FR)
(72) Inventeur: GANTILLON, Barbara, F-74320 Lechaux (FR); PERILLON, Jean-Luc, F-26130 Saint Paul Trois Chateaux (FR); VALLAT, Marie-France, F-68270 Wittenheim (FR); ROUCOULES, Vincent, F-68130 Carspach (FR)
(74) Mandataire: Novagraaf Technologies
(86) Numéro de dépôt international: PCT/FR2012/051939
(87) Numéro de publication internationale: WO 2013/030502

(56) Documents cités:
- WO-A1-2010/151336
- FR-A1- 2 923 696

## Description

La présente invention concerne de manière générale des articles culinaires comportant un revêtement antiadhésif, et plus particulièrement des articles culinaires comportant un revêtement antiadhésif à base de résine fluorocarbonée présentant des propriétés améliorées d'adhérence au support. La présente invention concerne également un procédé de fabrication d'un tel article culinaire.

De manière classique, on utilise, à titre de revêtement antiadhésif sur la face intérieure d'un article culinaire, un revêtement à base de résine fluorocarbonée (par exemple du PTFE) frittée. De tels revêtements sont connus non seulement pour leurs propriétés antiadhésives, mais également pour leur résistance à des agressions de type chimique ou thermique.

Cependant, de tels revêtements ont une adhérence limitée sur des supports métalliques, notamment des supports en aluminium, en acier inoxydable ou en fonte.

Pour remédier à ces problèmes, il est connu de l'homme du métier de préparer la surface de support par un dépôt d'un primaire d'accrochage comprenant un liant d'accrochage tel que la PAI, ou par des traitements de surface chimique (par exemple du type décapage chimique) ou mécanique (par exemple par brossage ou sablage), ou encore une combinaison de ces traitements.

Le document FR 2 923 696 divulgue un article culinaire comprenant un support présentant une surface de contact revêtue d'une couche d'émail rugueuse qui est recouverte par un revêtement antiadhésif comportant au moins une couche comprenant au moins une résine fluorocarbonée seule ou en mélange avec un liant d'accrochage thermostable et résistant à au moins 200°C, la résine fluorocarbonée et, le cas échéant, le liant d'accrochage thermostable formant un réseau fritté.

Toutefois, un traitement chimique de surface du type décapage implique l'utilisation de bains chimiques polluants et un traitement de surface mécanique du type brossage ou sablage déforme (légèrement) la surface ce qui impose une opération supplémentaire de conformation. De même le médium de sablage ou les brosses doivent être régénérés ou mis en décharge en fin de vie ce qui génère des pollutions. Pour remédier à ces problèmes, la Demanderesse a mis au point un traitement de surface par voie plasma qui permet la formation d'une couche d'interface entre support et le revêtement antiadhésif, cette couche d'interface améliorant l'ancrage ce de dernier sur le support et permettant ainsi au revêtement d'assurer une fonction à long terme sans risques de délaminage.

Plus particulièrement, la présente invention a pour objet un article comprenant un support présentant une surface de contact au moins partiellement métallique et qui est recouverte par un revêtement antiadhésif comportant au moins une couche comprenant au moins une résine fluorocarbonée seule ou en mélange avec un liant d'accrochage thermostable et résistant à au moins 200°C, la résine fluorocarbonée et, le cas échéant, le liant d'accrochage thermostable formant un réseau fritté,
caractérisé en ce que ladite surface de contact (comporte une couche d'interface consistant en une couche de polymère formée par polymérisation plasma à partir d'un précurseur choisi parmi les acides carboxyliques insaturés, leurs sels, leurs esters, les esters vinyliques d'acides carboxyliques saturés, les acides dicarboxyliques insaturés, leurs sels, leurs esters, leurs hémi-esters, leurs anhydrides, et les époxydes insaturés.
soit un support entièrement métallique (dans ce cas, la surface de contact est entièrement métallique), soit un support métallique partiellement recouvert d'une base dure (dans ce cas, la surface de contact est partiellement métallique, le complément étant constitué par la base dure), la base dure étant de préférence en émail ou en céramique.

La partie métallique du support est avantageusement en aluminium ou en alliage d'aluminium, en fonte d'aluminium (ou alliage d'aluminium de fonderie), ou en acier inoxydable.

A titre d'exemples non limitatifs d'articles culinaires conformes à la présente invention, on citera notamment des articles culinaires tels que les casseroles et les poêles, les woks et les sauteuses, les faits-touts et les marmites, les crêpières, les grills, les moules et plaques pour la pâtisserie, les plaques et grilles de barbecue, les bols de préparation.

A titre d'exemple d'acide carboxylique insaturé on peut citer l'acide méthacrylique.

A titre d'exemple d'acide dicarboxylique insaturé on peut citer l'anhydride maléique.

A titre d'exemple d'esters vinyliques ou allyliques d'acides carboxyliques saturés on peut citer l'acétate de vinyle.

A titre d'exemple d'époxydes insaturés on peut citer le méthacrylate de glycidyle.

La couche d'interface formée par polymérisation plasma peut ainsi avantageusement être une couche polymérique essentiellement constituée de polyméthacrylate de glycidyle ou de poly(anhydride maléique).

Pour favoriser l'adhérence du revêtement antiadhésif sur la surface de contact du support, il peut être avantageux que le revêtement antiadhésif comprenne une couche de primaire d'accrochage et au moins une couche de finition, ladite couche de primaire comportant, outre le réseau fritté de résine fluorocarbonée, au moins un liant d'accrochage.

Il peut également être avantageux que la surface de contact soit une surface préalablement traitée chimiquement ou mécaniquement. Un tel traitement permet également de modifier les états de surface et d'atteindre en particulier des tensions superficielles de l'ordre de 72 mN/m sur des supports en aluminium, ce qui améliore la mouillabilité du substrat. Dans le cas particulier des alliages d'aluminium, ce traitement crée une couche nanométrique d'oxydation qui est favorable à l'adhérence pour peu que le revêtement soit appliqué rapidement après le traitement plasma (de l'ordre d'au plus 60 secondes pour appliquer le revêtement antiadhésif sur le support ainsi traité par voie plasma). Pour cette variante de réalisation consistant à traiter préalablement à la formation du revêtement antiadhésif à base de résine fluorocarbonée, il est possible d'utiliser un revêtement antiadhésif essentiellement exempt de liant d'accrochage.

La résine fluorocarbonée utilisée dans le revêtement antiadhésif de l'article selon l'invention peut être avantageusement choisie parmi le polytétrafluoroéthylène (PTFE), le copolymère de tétrafluoroéthylène et de perfluoropropylvinyléther (PFA), le copolymère de tétrafluoroéthylène et d'hexafluoropropylène (FEP), et leurs mélanges (en particulier un mélange de PTFE et de PFA).

Le liant d'accrochage utilisé dans le revêtement antiadhésif de l'article selon l'invention peut être avantageusement choisi parmi les polyamides imides (PAI), les polyéthers imides (PEI), les polyamides (PI), les polyéthercétones (PEK), les polyétheréthercétones (PEEK), les polyéthersulfones (PES) et les sulfures de polyphénylène (PPS).

La présente invention a encore pour objet un procédé de fabrication d'un article selon l'invention, comprenant les étapes suivantes :
- fourniture d'un support au moins partiellement métallique et présentant deux faces opposées ;
- formation d'un revêtement antiadhésif sur l'une des faces dudit support comprenant
   - la préparation d'au moins une composition à base d'au moins une résine fluorocarbonée sous forme particulaire, ladite résine fluorocarbonée étant seule ou en mélange avec un liant d'accrochage thermostable et résistant à au moins 200°C ;
   - l'application de ladite composition sur l'une des faces (21) dudit support pour former une couche de résine fluorocarbonée ;
- cuisson dudit article ainsi revêtu de ladite couche de résine fluorocarbonée à une température comprise entre 350°C et 450°C pour fritter ladite couche, de sorte à obtenir un revêtement antiadhésif (3) à base de résine fluorocarbonée formant un réseau continu ;
ledit procédé étant caractérisé en ce qu'il comporte en outre, avant l'application de la composition à base de résine fluorocarbonée sur la face du support (surface de contact), une étape de polymérisation plasma pour former, sur ladite surface de contact, une couche de polymère à partir d'un précurseur choisi parmi les acides carboxyliques insaturés, leurs sels, leurs esters, les esters vinyliques d'acides carboxyliques saturés, les acides dicarboxyliques insaturés, leurs sels, leurs esters, leurs hémi-esters, leurs anhydrides, et les époxydes insaturés.

La résine fluorocarbonée et le liant d'accrochage thermostable sont tels que définis précédemment.

A titre d'exemple d'acide carboxylique insaturé on peut citer l'acide méthacrylique.

A titre d'exemple d'acide dicarboxylique insaturé on peut citer l'anhydride maléique.

A titre d'exemple d'esters vinyliques ou allyliques d'acides carboxyliques saturés on peut citer l'acétate de vinyle.

Dans le procédé selon l'invention, on utilise de préférence comme précurseurs l'anhydride maléique ou le méthacrylate de glycidyle.

Avantageusement, la formation du revêtement antiadhésif peut comprendre :
- l'application sur la surface de contact d'une composition de primaire d'accrochage pour former une couche de primaire d'accrochage, la composition de primaire comportant au moins une résine fluorocarbonée sous forme particulaire et au moins un liant d'accrochage thermostable et résistant à au moins 200°C ; et
- l'application sur la couche de primaire d'au moins d'une composition de finition pour former une couche de finition, la composition de finition comprenant au moins une résine fluorocarbonée sous forme particulaire.

Il peut également être avantageux que la surface de contact soit traitée chimiquement (par exemple dégraissée ou satinée) ou mécaniquement (notamment brossée). Dans ce cas, il est possible de former un revêtement antiadhésif par application, directement sur la surface de contact préalablement traitée, d'au moins une composition de finition essentiellement exempte de liant d'accrochage, pour former au moins une couche de finition.

D'autres avantages et particularités de la présente invention résulteront de la description qui va suivre, donnée à titre d'exemple non limitatif et faite en référence aux figures annexées :
- la figure 1 représente une vue schématique en coupe d'un exemple d'article culinaire conforme à l'invention selon l'art antérieur (support non traité par plasma et primaire d'accrochage),
- la figure 2 représente une vue schématique en coupe d'un article culinaire conforme à l'invention (support traité par polymérisation plasma avec primaire d'accrochage),

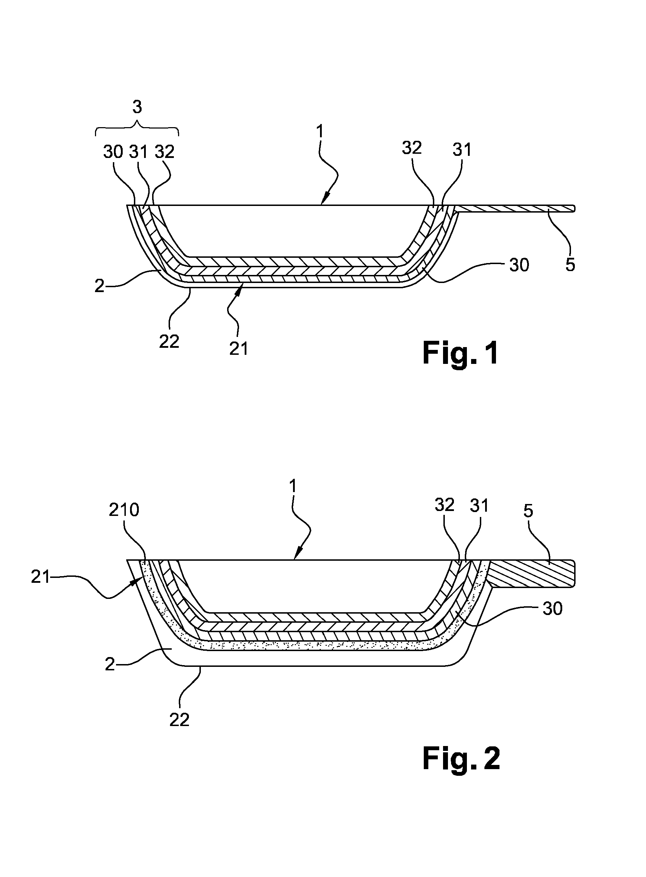

Les éléments identiques représentés sur les figures 1 et 2 sont identifiées par des références numériques identiques.

Sur les figures 1 et 2, on a représenté à titre d'exemple d'article selon l'invention, une poêle 1 comprenant un support métallique 2 se présentant sous forme de calotte creuse et une poignée de préhension 5. Le support 2 comprend une face intérieure 21 (surface de contact) qui est la face orientée du côté des aliments susceptibles d'être reçus dans la poêle 1, et une face extérieure 22 qui est destinée à être disposée vers une source de chaleur extérieure. La face intérieure 21 est revêtue d'un revêtement antiadhésif 3, qui comprend successivement à partir du support 2 une couche de primaire 30 d'accrochage et deux couches de finition 31, 32. Les couches de primaire 30, de finition 31 et de décor 32 sont à base de PTFE.

Le support 2 de la poêle représentée sur la figure 1 n'a pas été traitée par voie plasma conformément à la présente invention, tandis que celui de la poêle représentée sur la figure 2 a été traité par polymérisation plasma, conduisant à la formation d'une couche de polymère 210 sur la surface de contact 21 du support.

L'invention est illustrée plus en détail dans les exemples suivants.

Dans ces exemples, sauf indication contraire, tous les pourcentages et parties sont exprimés en poids.

### EXEMPLES

### Produits

### Supports

- plaquettes lisses en aluminium (nuance 4917) de longueur 10 cm et de largeur 5 cm,
- plaquettes brossées en aluminium (nuance 4917) de longueur 10 cm et de largeur 5 cm,
- plaquettes en aluminium (nuance 4917) de longueur 10 cm et de largeur 5 cm, satinées (traitées par immersion dans un bain de soude puis neutralisées à l'acide et enfin rincées),
- plaquettes lisses en acier inoxydable de longueur 10 cm et de largeur 5 cm,

### Précurseurs

- anhydride maléique
- méthacrylate de glycidyle,

**Composition de primaire 1 CP1(sans PAI)**

| | |
|---|---|
| Résine PES (poudre micronisée) : | 0,5 g |
| LUDOX AM30 (silice colloïdale dans eau à 30%) : | 21,5 g |
| PTFE (dispersion de PTFE à 60%) | 78 g |
| Total : | 100 g |

**Composition de primaire 1 CP2(avec PAI)**

| | |
|---|---|
| Résine PAI (29% sec dans NEP): | 58,9 g |
| LUDOX AM30 (silice colloïdale dans eau 30%) : | 19,3 g |
| Noir de Carbone (25% dans eau) | 5, 6g |
| PTFE (dispersion de PTFE à 60%): | 16,2 g |
| Total : | 100 g |

**Composition de finition**

| | |
|---|---|
| Dispersion PTFE (60% sec) | 80,6 g |
| Dispersion PFA (50% sec) | 0,5 g |
| Noir de fumée (25% sec) | 0,02 g |
| Agents d'étalements (tensio-actifs) | 2.23 g |
| Eau : | 8,02 g |
| Xylène : | 6,50 g |
| Copolymère acrylique >95% : | 0,6 g |
| Triéthanolamine : | 0,22 g |
| Iriodin 153 : | 0,2 g |
| Propylène Glycol : | 1,11 g |
| Total | 100,00 g |

### Dispositif de traitement plasma et protocole d'essai correspondant

o dispositif utilisé dans le cadre d'un plasma sous vide :
   ▪ réacteur de dépôt composé d'une enceinte cylindrique en acier inoxydable munie de dispositifs de mesure et d'introduction des matériaux et des précurseurs, ainsi que de dispositifs d'établissement du vide (10⁻³ mmHg)
o procédé comprenant :
   ▪ traitement plasma par polymérisation de l'un au moins des précurseurs.
   ▪ enduction de la composition de primaire CP1, puis de la composition de finition,
   ▪ étuve IR étuve IR à 100°C
   ▪ frittage dans un four classique à 430°C pendant environ 11 minutes.

### Test

### Evaluation de l'adhérence d'un revêtement antiadhésif sur un substrat métallique

On effectue un test par quadrillage selon la norme ISO 2409, suivi d'une immersion de l'article pendant 9 heures (par 3 cycles de trois heures dans de l'eau bouillante). Puis, on observe si le revêtement antiadhésif présente ou non un décollement. La cotation est la suivants :
▪ aucun carré ne doit être décollé pour obtenir une cotation de 100 (adhérence excellente) ;
▪ en cas de décollement la valeur relevée est égale à 100 diminuée du nombre de carrés décollés.
La cotation est la suivants :
▪ l'adhérence du revêtement antiadhésif sur le support est jugée industriellement acceptable si on a une valeur égale ou supérieure à 95 ce niveau d'adhérence convient alors pour tout type d' articles culinaires quel que soit son niveau de sollicitation mécanique.
▪ l'adhérence du revêtement antiadhésif sur le support est encore jugée industriellement acceptable si elle a une valeur comprise entre 90 et 95 mais il convient alors de restreindre l'application à des articles peu sollicités mécaniquement comme par exemple des articles pour pâtisserie ou des plats à four.

L'ensemble des plaquettes a été revêtu d'un revêtement antiadhésif 3, comprenant ou non une composition de primaire (CP1 ou CP2) et une composition de finition, après avoir été préalablement ou non soumises à un traitement par voie plasma conformément au procédé selon l'invention.

L'adhérence du revêtement antiadhésif sur le substrat métallique a ensuite évaluée pour l'ensemble des plaquettes ainsi revêtues et les résultats obtenus à l'issue de ce test sont rassemblés dans le tableau 1.

Ces résultats montrent que dans tous les cas un traitement plasma améliore l'adhérence d'un revêtement antiadhésif à base de résine fluorocarbonée (notamment à base de PTFE) sur tous types de supports.

Plus particulièrement sur un support en aluminium brossé ou satiné, le traitement plasma selon le procédé de l'invention permet de s'affranchir de la présence d'une couche de primaire.

Pour un support lisse, en aluminium ou en acier inoxydable, le traitement plasma permet de s'affranchir de la présence d'un liant d'accrochage de type PAI dans la couche de primaire (pour tout type de précurseur), voire même d'une couche de primaire (avec notamment un précurseur tel que le méthacrylate de glycidyle).

**Tableau 1 : résultats au test d'adhérence**

| **Type de support 2** | **Revêtement antiadhésif** | **Essais témoin pas de traitement par voie plasma** | **Polymérisation plasma (anhydride maléique) (10⁻³mmHg)** | **Polymérisation plasma (méthacrylate de glycidyle) (10⁻³mmHg)** |
|---|---|---|---|---|
| plaquettes lisses en aluminium | Sans primaire | 0% | 20% | 99% |
| plaquettes lisses en aluminium | Avec primaire CP1 | 80% | 95% | 100% |
| plaquettes lisses en aluminium | Avec primaire CP2 | 98% | 100% | 100% |
| plaquettes brossées en aluminium | Sans primaire | 0% | 100% | 100% |
| plaquettes brossées en aluminium | Avec primaire CP1 | 95% | 100% | 100% |
| plaquettes brossées en aluminium | Avec primaire CP2 | 98% | 100% | 100% |
| plaquettes en aluminium satinées | Sans primaire | 80% | 100% | 100% |
| plaquettes en aluminium satinées | Avec primaire CP1 | 98% | 100% | 100% |
| plaquettes en aluminium satinées | Avec primaire CP2 | 100% | 100% | 100% |
| plaquettes lisses en acier inoxydable | Sans primaire | 0% | 40% | 99% |
| plaquettes lisses en acier inoxydable | Avec primaire CP1 | 95% | 100% | 100% |

## Revendications

1. Article culinaire (1) comprenant un support (2) présentant une surface de contact (21) au moins partiellement métallique et qui est recouverte par un revêtement antiadhésif (3) comportant au moins une couche (30, 31, 32) comprenant au moins une résine fluorocarbonée seule ou en mélange avec un liant d'accrochage thermostable et résistant à au moins 200°C, la résine fluorocarbonée et, le cas échéant, le liant d'accrochage thermostable formant un réseau fritté,
**caractérisé en ce que** ladite surface de contact (21) comporte une couche d'interface (210) consistant en une couche de polymère formée par polymérisation plasma à partir d'un précurseur choisi parmi les acides carboxyliques insaturés, leurs sels, leurs esters, les esters vinyliques d'acides carboxyliques saturés, les acides dicarboxyliques insaturés, leurs sels, leurs esters, leurs hémi-esters, leurs anhydrides, et les époxydes insaturés.

2. Article culinaire (1) selon la revendication 1, **caractérisé en ce que** le support (2) est soit un support entièrement métallique, soit un support métallique partiellement recouvert d'une base dure.

3. Article culinaire (1) selon les revendications 1 ou 2, **caractérisé en ce que** la couche d'interface (210) est une couche de polyméthacrylate de glycidyle ou de poly(anhydride maléique) formée par polymérisation plasma.

4. Article culinaire (1) selon l'une quelconque des revendications précédentes, **caractérisé en ce que** le revêtement antiadhésif (3) comprend une couche de primaire (30) d'accrochage et au moins une couche de finition (31, 32), ladite couche de primaire (30) comportant, outre le réseau fritté de résine fluorocarbonée, au moins un liant d'accrochage.

5. Article culinaire (1) selon l'une quelconque des revendications précédentes, **caractérisé en ce que** ladite surface de contact (21) est une surface traitée chimiquement ou mécaniquement.

6. Article (1) selon la revendication 5, **caractérisé en ce que** le revêtement antiadhésif (3) est essentiellement exempt de liant d'accrochage.

7. Article culinaire (1) selon l'une quelconque des revendications précédentes, **caractérisé en ce que** la résine fluorocarbonée est choisie parmi le polytétrafluoroéthylène (PTFE), le copolymère de tétrafluoroéthylène et de perfluoropropylvinyléther (PFA), le copolymère de tétrafluoroéthylène et d'hexafluoropropylène (FEP) et leurs mélanges.

8. Article culinaire (1) selon l'une quelconque des revendications 1 à 5 et 7, **caractérisé en ce que** le liant d'accrochage est choisi parmi les polyamides imides (PAI), les polyéthers imides (PEI), les polyamides (PI), les polyéthercétones (PEK), les polyétheréthercétones (PEEK), les polyéthersulfones (PES) et les sulfures de polyphénylène (PPS).

9. Article culinaire (1) selon l'une quelconque des revendications précédentes, **caractérisé en ce qu'**il constitue un article culinaire (1) dont le support (2) présente une face intérieure (21) concave destinée à être en contact avec des aliments susceptibles d'être introduits dans ledit article (1), et une face extérieure (22) convexe destinée à être disposée vers une source de chaleur.

10. Procédé de fabrication d'un article culinaire (1), comprenant les étapes suivantes :
- fourniture d'un support (2) au moins partiellement métallique présentant deux faces opposées (21, 22) ;
- formation d'un revêtement antiadhésif (3) sur l'une des faces (21) dudit support (2) comprenant :
• la préparation d'au moins une composition à base d'au moins une résine fluorocarbonée sous forme particulaire, ladite résine fluorocarbonée étant seule ou en mélange avec un liant d'accrochage thermostable et résistant à au moins 200°C ;
• l'application de ladite composition sur l'une des faces (21) dudit support (2) pour former une couche de résine fluorocarbonée ;
- cuisson dudit article ainsi revêtu de ladite couche de résine fluorocarbonée à une température comprise entre 350°C et 450°C pour fritter ladite couche, de sorte à obtenir un revêtement antiadhésif (3) à base de résine fluorocarbonée formant un réseau continu ;
ledit procédé étant **caractérisé en ce qu'**il comporte en outre, avant l'application de la composition à base de résine fluorocarbonée sur la face (21) du support (2), une étape de polymérisation plasma pour former, sur ladite surface de contact (21), une couche (210) de polymère à partir d'un précurseur choisi parmi les acides carboxyliques insaturés, leurs sels, leurs esters, les esters vinyliques d'acides carboxyliques saturés, les acides dicarboxyliques insaturés, leurs sels, leurs esters, leurs hémi-esters, leurs anhydrides, et les époxydes insaturés.

11. Procédé selon la revendication 10, **caractérisé en ce que** le précurseur est le méthacrylate de glycidyle ou l'anhydride maléique.

12. Procédé selon les revendications 10 ou 11, **caractérisé en ce que** la formation du revêtement antiadhésif (3) comprend :
• l'application sur la surface de contact (21) d'une composition de primaire d'accrochage pour former une couche de primaire d'accrochage (30), ladite composition de primaire comportant au moins une résine fluorocarbonée sous forme particulaire et au moins un liant d'accrochage thermostable et résistant à au moins 200°C ; et
• l'application sur la couche de primaire (30) d'au moins d'une composition de finition pour former une couche de finition (31, 32), ladite composition de finition comprenant au moins une résine fluorocarbonée sous forme particulaire.

13. Procédé selon l'une quelconque des revendications 10 à 12, **caractérisé en ce que** ladite surface de contact (21) est une surface traitée chimiquement ou mécaniquement.

14. Procédé selon la revendication 13, **caractérisé en ce que** la surface de contact (21) est brossée, dégraissée ou satinée.

15. Procédé selon les revendications 13 ou 14, **caractérisé en ce que** la formation du revêtement antiadhésif (3) comprend l'application sur la surface de contact (21) d'au moins d'une composition de finition essentiellement exempte de liant d'accrochage, pour former une couche de finition (31, 32), ladite composition de finition comprenant au moins une résine fluorocarbonée sous forme particulaire.

## Patentansprüche

1. Kochartikel (1), der eine Auflage (2) umfasst, die eine zumindest zum Teil metallische Kontaktoberfläche (21) aufweist und die mit einer Antihaftbeschichtung (3) bedeckt ist, die mindestens eine Schicht (30, 31, 32) beinhaltet, die mindestens ein Fluorkohlenstoffharz allein oder in Mischung mit einem Haftbindemittel, das wärmebeständig ist und mindestens 200 °C standhält, umfasst, wobei das Fluorkohlenstoffharz und gegebenenfalls das wärmebeständige Haftbindemittel ein gesintertes Netz bilden,
**dadurch gekennzeichnet, dass** die besagte Kontaktoberfläche (21) eine Grenzflächenschicht (210) beinhaltet, die aus einer Polymerschicht besteht, die durch Plasmapolymerisation aus einem Vorläufer gebildet wird, der aus ungesättigten Carbonsäuren, deren Salzen, deren Estern, Vinylestern von gesättigten Carbonsäuren, ungesättigten Dicarbonsäuren, deren Salzen, deren Estern, deren Halbestern, deren Anhydriden und ungesättigten Epoxiden ausgewählt ist.

2. Kochartikel (1) nach Anspruch 1, **dadurch gekennzeichnet, dass** die Auflage (2) entweder eine vollständig metallische Auflage oder eine metallische Auflage, die zum Teil von einer harten Basis bedeckt wird, ist.

3. Kochartikel (1) nach den Ansprüchen 1 oder 2, **dadurch gekennzeichnet, dass** die Grenzflächenschicht (210) eine Schicht aus Polyglycidylmethacrylat oder Poly(maleinsäureanhydrid) ist, die durch Plasmapolymerisation gebildet wird.

4. Kochartikel (1) n nach einem der vorhergehenden Ansprüche, **dadurch gekennzeichnet, dass** die Antihaftbeschichtung (3) eine primäre Haftschicht (30) und mindestens eine Deckschicht (31, 32) umfasst, wobei die besagte primäre Schicht (30) neben dem gesinterten Netz aus Fluorkohlenstoffharz mindestens ein Haftbindemittel beinhaltet.

5. Kochartikel (1) nach einem der vorhergehenden Ansprüche, **dadurch gekennzeichnet, dass** die besagte Kontaktoberfläche (21) eine chemisch oder mechanisch behandelte Oberfläche ist.

6. Artikel (1) nach Anspruch 5, **dadurch gekennzeichnet, dass** die Antihaftbeschichtung (3) im Wesentlichen frei von Haftbindemittel ist.

7. Kochartikel (1) nach einem der vorhergehenden Ansprüche, **dadurch gekennzeichnet, dass** das Fluorkohlenstoffharz aus Polytetrafluorethylen (PTFE), einem Copolymer von Tetrafluorethylen und Perfluorpropylvinylether (PFA), einem Copolymer von Tetrafluorethylen und Hexafluorpropylen (FEP) und deren Gemischen ausgewählt ist.

8. Kochartikel (1) nach einem der Ansprüche 1 bis 5 und 7, **dadurch gekennzeichnet, dass** das Haftbindemittel aus Polyamidimiden (PAI), Polyetherimiden (PEI), Polyamiden (PI), Polyetherketonen (PEK), Polyetheretherketonen (PEEK), Polyethersulfonen (PES) und Polyphenylsulfiden (PPS) ausgewählt ist.

9. Kochartikel (1) nach einem der vorhergehenden Ansprüche, **dadurch gekennzeichnet, dass** er aus einem Kochartikel (1) besteht, dessen Auflage (2) eine konkave Innenseite (21), die dazu vorgesehen ist, in Kontakt mit Lebensmitteln zu sein, die dazu geeignet sind, in den besagten Artikel (1) eingebracht zu werden, und eine konvexe Außenseite (22) aufweist, die dazu vorgesehen ist, gegen eine Hitzequelle angeordnet zu werden.

10. Verfahren zur Fertigung eines Kochartikels (1), das die folgenden Schritte umfasst:
- Bereitstellen einer zumindest zum Teil metallischen Auflage (2), die zwei entgegengesetzte Seiten (21, 22) aufweist;
- Bilden einer Antihaftbeschichtung (3) auf einer der Seiten (21) der besagten Auflage (2), wobei das Bilden Folgendes umfasst:
-- Herstellen mindestens einer Zusammensetzung auf der Basis mindestens eines Fluorkohlenstoffharzes in Teilchenform, wobei das besagte Fluorkohlenstoffharz allein oder in Mischung mit einem Haftbindemittel, das wärmebeständig ist und mindestens 200 °C standhält, ist;
-- Aufbringen der besagten Zusammensetzung auf eine der Seiten (21) der besagten Auflage (2), um eine Fluorkohlenstoffharzschicht zu bilden;
- Brennen des besagten so mit der besagten Fluorkohlenstoffharzschicht beschichteten Artikels bei einer Temperatur zwischen 350 °C und 450 °C, um die besagte Schicht zu sintern, um eine Antihaftbeschichtung (3) auf der Basis von Fluorkohlenstoffharz zu erhalten, die ein ununterbrochenes Netz bildet;
wobei das besagte Verfahren **dadurch gekennzeichnet ist, dass** es außerdem vor dem Aufbringen der Zusammensetzung auf der Basis von Fluorkohlenstoffharz auf die Seite (21) der Auflage (2) einen Plasmapolymerisationsschritt beinhaltet, um auf der besagten Kontaktoberfläche (21) eine Polymerschicht (210) aus einem Vorläufer zu bilden, der aus ungesättigten Carbonsäuren, deren Salzen, deren Estern, Vinylestern von gesättigten Carbonsäuren, ungesättigten Dicarbonsäuren, deren Salzen, deren Estern, deren Halbestern, deren Anhydriden und ungesättigten Epoxiden ausgewählt ist.

11. Verfahren nach Anspruch 10, **dadurch gekennzeichnet, dass** der Vorläufer Glycidylmethacrylat oder Maleinsäureanhydrid ist.

12. Verfahren nach einem der Ansprüche 10 oder 11, **dadurch gekennzeichnet, dass** das Bilden der Antihaftbeschichtung (3) Folgendes umfasst:
-- Aufbringen einer primären Haftzusammensetzung auf die Kontaktoberfläche (21), um eine primäre Haftschicht (30) zu bilden, wobei die besagte primäre Zusammensetzung mindestens ein Fluorkohlenstoffharz in Teilchenform und mindestens ein Haftbindemittel, das wärmebeständig ist und mindestens 200 °C standhält, beinhaltet;
-- Aufbringen mindestens einer Deckzusammensetzung auf die primäre Schicht (30), um eine Deckschicht (31, 32) zu bilden, wobei die besagte Deckzusammensetzung mindestens ein Fluorkohlenstoffharz in Teilchenform umfasst.

13. Verfahren nach einem der Ansprüche 10 bis 12, **dadurch gekennzeichnet, dass** die besagte Kontaktoberfläche (21) eine chemisch oder mechanisch behandelte Oberfläche ist.

14. Verfahren nach Anspruch 13, **dadurch gekennzeichnet, dass** die Kontaktoberfläche (21) gebürstet, entfettet oder satiniert ist.

15. Verfahren nach den Ansprüchen 13 oder 14, **dadurch gekennzeichnet, dass** das Bilden der Antihaftbeschichtung (3) das Aufbringen mindestens einer Deckzusammensetzung, die im Wesentlichen frei von Haftbindemittel ist, auf die Kontaktoberfläche (21) umfasst, um eine Deckschicht (31, 32) zu bilden, wobei die besagte Deckzusammensetzung mindestens ein Fluorkohlenstoffharz in Teilchenform umfasst.

## Claims

1. Cookware item (1) comprising a support (2) having an at least partially metal contact surface (21) and which is layered with a non-stick layering (3) comprising at least one layer (30, 31, 32) comprising at least one fluorocarbon resin alone or in a mixture with a heat-stable bonding binder resistant to at least 200°C, the fluorocarbon resin and, if applicable, the heat-stable bonding binder forming a sintered lattice,
**characterised in that** said contact surface (21) comprises an interface layer (210) consisting of a layer of polymer formed by plasma polymerisation using a precursor chosen from unsaturated carboxylic acids, the salts thereof, the esters thereof, saturated carboxylic acid vinyl esters, unsaturated dicarboxylic acids, the salts thereof, the esters thereof, the hemiesters thereof, the anhydrides thereof, and unsaturated epoxides.

2. Cookware item (1) according to claim 1, **characterised in that** the support (2) is either an entirely metal support, or a metal support partially layered with a hard base.

3. Cookware item (1) according to claims 1 or 2, **characterised in that** the interface layer (210) is a layer of glycidyl polymethacrylate or poly(maleic anhydride) formed by plasma polymerisation.

4. Cookware item (1) according to any of the above claims, **characterised in that** the non-stick layering (3) comprises a bonding primer layer (30) and at least one finishing layer (31, 32), said primer layer (30) comprising, besides the sintered fluorocarbon resin lattice, at least one bonding binder.

5. Cookware item (1) according to any of the above claims, **characterised in that** said contact surface (21) is a chemically or mechanically treated surface.

6. Cookware item (1) according to claim 5, **characterised in that** the non-stick layering (3) is essentially devoid of bonding binder.

7. Cookware item (1) according to any of the above claims, **characterised in that** the fluorocarbon resin is chosen from polytetrafluoroethylene (PTFE), tetrafluoroethylene and perfluoropropylvinylether copolymer (PFA), tetrafluoroethylene and hexafluoropropylene copolymer (FEP) and mixtures thereof.

8. Cookware item (1) according to any of claims 1 to 5 and 7, **characterised in that** the bonding binder is chosen from polyamide imides (PAI), polyether imides (PEI), polyamides (PI), polyetherketones (PEK), polyetheretherketones (PEEK), polyethersulphones (PES) and polyphenylene sulphides (PPS).

9. Cookware item (1) according to any of the above claims, **characterised in that** it constitutes a cookware item (1) wherein the support (2) has a concave inner face (21) intended to be in contact with food liable to be introduced into said cookware (1), and a convex outer face (22) intended to be arranged facing a heat source.

10. Method for manufacturing a cookware item (1), comprising the following steps:
- providing an at least partially metal support (2) having two opposite faces (21, 22);
- forming a non-stick layering (3) on one of the faces (21) of said support (2) comprising:
-- preparing at least one composition based on at least one fluorocarbon resin in particulate form, said fluorocarbon resin being alone or in a mixture with a heat-stable bonding binder resistant to at least 200°C;
-- applying said composition onto one of the faces (21) of said support (2) to form a layer of fluorocarbon resin;
- curing said cookware layered in this way with said layer of fluorocarbon resin at a temperature between 350°C and 450°C in order to sinter said layer, so as to obtain a non-stick layering (3) based on fluorocarbon resin forming a continuous lattice;
said method being **characterised in that** it further comprises, before applying the composition based on fluorocarbon resin onto the face (21) of the support (2), a plasma polymerisation step to form, on said contact surface (21), a layer (210) of polymer using a precursor chosen from unsaturated carboxylic acids, the salts thereof, the esters thereof, saturated carboxylic acid vinyl esters, unsaturated dicarboxylic acids, the salts thereof, the esters thereof, the hemiesters thereof, the anhydrides thereof, and unsaturated epoxides.

11. Method according to claim 10, **characterised in that** the precursor is glycidyl polymethacrylate or maleic anhydride.

12. Method according to claims 10 or 11, **characterised in that** the formation of the non-stick layering (3) comprises:
-- applying, on the contact surface (21), a bonding primer composition to form a bonding primer layer (30), said bonding primer composition comprising at least one fluorocarbon resin in particulate form and at least one heat-stable bonding binder resistant to at least 200°C; and
-- applying, on the primer layer (30), at least one finishing composition to form a finishing layer (31, 32), said finishing composition comprising at least one fluorocarbon resin in particulate form.

13. Method according to any of claims 10 to 12, **characterised in that** said contact surface (21) is chemically or mechanically treated surface.

14. Method according to claim 13, **characterised in that** the contact surface (21) is brushed, degreased or satin-finished.

15. Method according to claims 13 or 14, **characterised in that** the formation of the non-stick layering (3) comprises applying, on the contact surface (21), at least one finishing composition essentially devoid of bonding binder, to form a finished layer (31, 32), said finishing composition comprising at least one fluorocarbon resin in particulate form.
